# EUROPEAN PATENT SPECIFICATION

(11) **EP 0 627 340 B1**
(45) Date of publication and mention of the grant of the patent: **15.10.1997**
(21) Application number: 94201365.7
(22) Date of filing: 13.05.1994
(51) Int. Cl.: B60N 2/48

(54) **Vehicle pivotal headrest**
Schwenkbare Kopfstütze für Fahrzeuge
Appui-tête pivotable pour véhicules

(30) Priority: 01.06.1993 US 69317
(43) Date of publication of application: 07.12.1994
(73) Proprietor: GENERAL MOTORS CORPORATION, Detroit Michigan 48202 (US)
(72) Inventor: Viano, David Charles, Bloomfield Hill, Michigan 48013 (US); Humer, Mladen, East Detroit, Michigan 48021 (US); Neely, Richard Jon, Casco, Michigan 48064 (US)
(74) Representative: Denton, Michael John

(56) References cited:
- DE-A- 2 206 329
- DE-A- 2 430 572
- US-A- 2 973 029
- US-A- 3 655 241
- US-A- 3 964 788
- US-A- 4 278 291
- US-A- 4 720 146
- US-A- 4 762 367
- US-A- 4 822 102

## Description

The field of the present invention is that of seat headrest arrangements and methods of utilisation thereof. The present invention relates in particular to a vehicle seat and headrest arrangement as specified in the preamble of claim 1, for example as disclosed in DE-A-2 206 329.

Headrests are known in the vehicle seating art. Examples of vehicle seat headrests can be found by review of US-A-4,822,102 (Duvenkamp), US-A-4,762,367 (Denton), and US-A-3 655 241.

The present invention provides a vehicle seat headrest arrangement which provides an alternative to the aforementioned patents with special unique advantages to be explained hereinafter.

A vehicle seat and headrest arrangement according to the present invention is characterised by the features specified in the characterising portion of claim 1.

The invention and how it may be performed are hereinafter particularly described with reference to the accompanying drawings, in which:
Figure 1 is a perspective view of a preferred embodiment of a vehicle seat headrest arrangement according to the present invention;
Figure 2 is an enlarged view of the headrest shown in Figure 1, with portions of a seatback cushion removed for clarity of illustration;
Figure 3 is a side view illustrating the operation of the headrest shown in Figure 2;
Figure 4 is a perspective view of an alternative preferred embodiment of the present invention; and
Figure 5 is a side view illustrating the operation of the headrest shown in Figure 4.

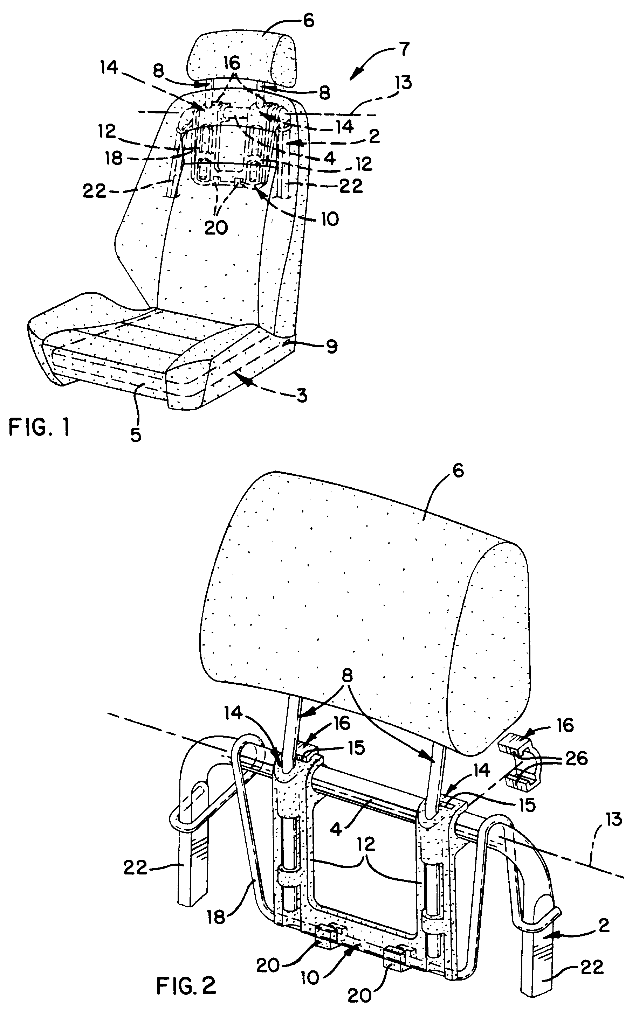

Referring now to Figure 1, a vehicle seat and headrest arrangement 7 according to the present invention has a seat bun frame 3. The seat bun frame 3 has a fore end 5 and an aft end 9 generally positionally aligned with fore and aft segments of a vehicle in which the seat and headrest arrangement 7 is placed. Joined to the seat bun frame 3 generally adjacent its aft end 9 is a seatback frame 2. The seatback frame 2 is generally in the shape of an inverted U having two sides 22 joined by a cross-frame member 4. Typically, the seat bun frame 3 and seat back frame 2 will be made from steel or other structural metallic members.

Providing a surface for contact with the head of a vehicle seat occupant is a headrest cushion 6. The headrest cushion 6 has extending therefrom two posts 8. An impact target plate 10 is pivotally mounted to the cross-frame member 4 along a fixed pivotal axis 13 extending generally perpendicular to the fore and aft direction of the vehicle. The plate 10 has two formed alignment members 12 for each respective post 8 for mounting of the headrest cushion 6 to the seatback frame 2. The headrest posts 8 are adjustable vertically with respect to the plate 10 in a manner conventional for that of vehicle seat headrests.

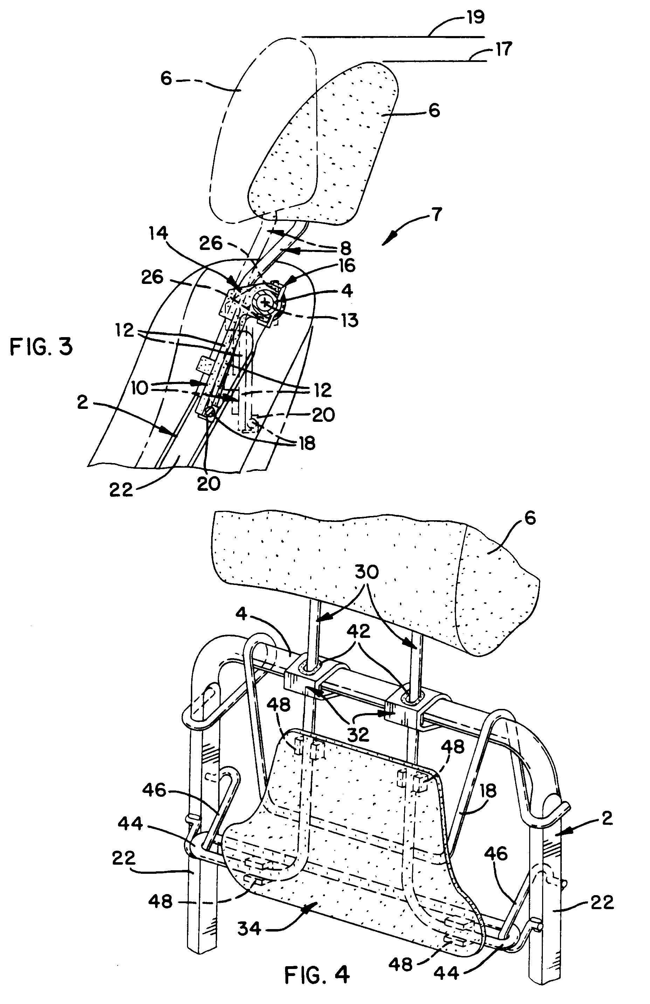

The plate 10 mentioned previously is pivotally mounted with respect to the cross-frame member 4 by virtue of its clamped ends 14. The clamped ends 14 are joined to the cross-frame member 4 by the use of metal clips 16 which have flanges 26 that pop into apertures 15 (only one shown) of the clamped ends 14. To stabilise the headrest cushion 6 in position and to prevent its rotation except when subjected to a threshold amount of force, there is a spring 18 which wraps around the intersection of the sides 22 with the cross-frame member 4. The spring 18 extends downwardly and is held to the plate 10 by clips 20. Rearward loading of the plate 10 will cause the headrest cushion 6 to pivot forwardly towards the head of a seat occupant. The loading required for pivotal movement of the headrest cushion 6 can be set to occur only during an instance where a vehicle seat occupant is seated in the seat and the vehicle undergoes acceleration due to a rear impact-type situation. Alternatively, the spring 18 can be configured or sized to be easily movable at lower pressure levels and then to plastically deform under predetermined loads representative of a rear impact-type situation. The pivoting of the headrest cushion 6 forwardly also has a beneficial effect of raising the relative height of the headrest 6 with respect to the seat bun frame 3 from a height indicated by reference number 17 to a height indicated by reference numeral 19 as shown in Figure 3.

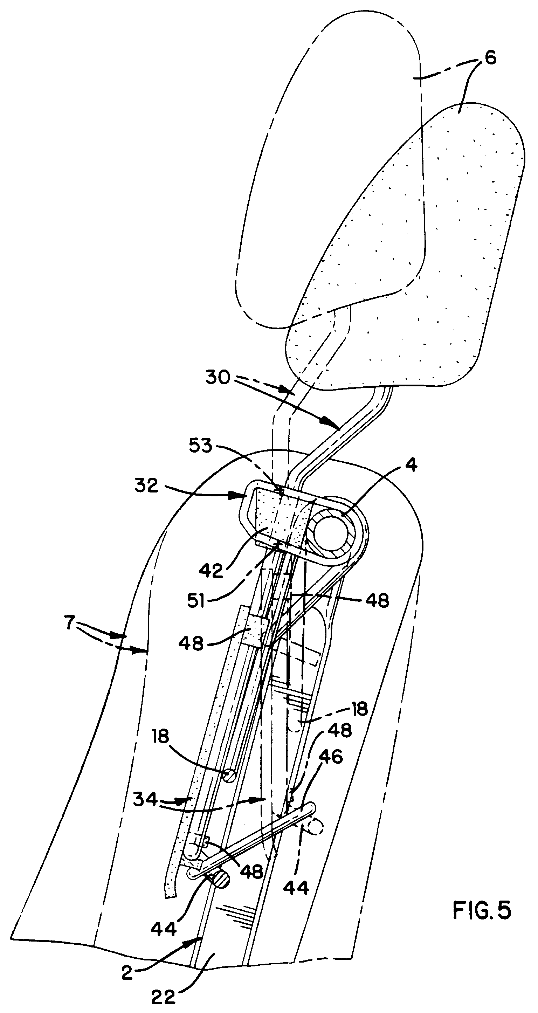

Referring additionally to Figures 4 and 5, an alternative preferred embodiment of the present invention is illustrated with similar items providing the same function given like numerals to those shown in Figures 1 to 3. In Figure 4, posts 30 are held to the cross-frame member 4 by penetration of each post 30 through a respective elastomeric bushing 42 which is mounted in a clip 32 which is fitted on the cross-frame member 4. The posts 30 additionally extend downwardly of the cross-frame member 4, having loop sections 44 which are movably engaged with two angular cam guides 46, each of which has a generally downward slope projecting generally forwardly relative to the seat back frame 2. An impact plate 34 is attached with the posts 30 by four clips 48. A spring 18 biases the headrest cushion 6 against rotation by contact with the posts 30. Therefore, the axis of rotation of the posts 30 with respect to the cross-frame member 4 is non-fixed with respect to the posts 30.

A force exerted upon the plate 34 causes the posts 30 to have a variable axis of rotation with respect to the cross-frame member 4, since the cam guides 46 will cause the posts 30 to rise upwardly relative to the cross-frame member 4 after a sufficient force has been imparted to the plate 34. Also, the interaction of the loop sections 44 with the cam guides 46 will cause the headrest cushion 6 to be rotated slightly forwardly (as shown in broken outline in Figure 5).

Upon sufficient force being exerted on the plate 34, the posts 30 have an axis of rotation noted as 51. On being subjected to a rear impact of sufficient magnitude, the posts 30 will be moved upwards with respect to the clips 32, placing the headrest cushion 6 in a higher and more forward position relative to the seat back frame 2. The axis of rotation 51 will be constant with respect to the clips 32. However, the axis of rotation of the posts 30 at the initial impact will be projected to point 53 due to the extending upward motion of the posts 30.

In normal vehicle seat and headrest arrangements, during the initial stages of a rear impact, the occupant's torso is in contact with the seatback but the head of the occupant is several inches forward of the headrest. This condition is consistent with the body of the occupant being reclined at about 20 degrees from vertical with the neck being held approximately vertical. In contrast, the seat is usually at a reclined angle of approximately 25 degrees from vertical, and the headrest either follows the contour of the seatback or curves slightly forward. However, for seating comfort, the head of the occupant is usually not in contact with the headrest whilst the occupant is driving the vehicle. As the occupant loads the seatback in a rear impact, force builds up behind the torso and buttocks of the seat occupant. Depending upon the compliance of the seatback, the occupant compresses into the cushion but the head, neck and torso of the occupant move in unison with one another. Typically, there is a greater compression in the buttocks region of the seat occupant, with a gradual reduction in compression up to the shoulder level as the body remains upright. The more severe the rear impact, the greater is the compression of the occupant into the seatback. As this action is occurring, the initial load exerted on the seat back by the occupant attempts to deflect the seatback rearwardly of the vehicle. The amount of deflection is related to the bending stiffness of the seatback. However, the seatback may possibly deflect under the torso load prior to the head and neck of the occupant contacting the headrest. Therefore, in a conventional seat, there may exist a gap between the head and headrest in a rear impact situation. In the present invention, the force of the occupant's torso being exerted on the seat back frame 2 causes the impact plate 34 or 10 to cause the headrest cushion 6 to rotate towards the vehicle occupant. The greater the rear impact acceleration, the greater the resultant force on the seat occupant and the greater the forward rotation and upward movement of headrest 6. An additional advantage is found in the embodiment shown in Figures 4 and 5 in that the headrest cushion 6 and posts 30 move upwardly, thereby increasing the relative height of the headrest cushion 6 with respect to the seat occupant's head and minimising any possible gap between the head and the headrest cushion 6. The above action of the headrest cushion 6 provides a more idealised condition for taller seat occupants.

Whilst this invention has been described in terms of preferred embodiments thereof, it will be appreciated that other forms could readily be adapted by one skilled in the art. Accordingly, the scope of this invention is to be considered limited only by the following claims.

## Claims

1. A vehicle seat and headrest arrangement comprising a seat bun frame (3) having fore and aft ends (5,9); a seatback frame (2) having two sides (22) joined to the seat bun frame (3) adjacent the aft end (9) of the seat bun frame (3); a headrest cushion (6) pivotally attached to the seatback frame (2) along a pivotal axis extending substantially perpendicular to the fore and aft ends (5,9) of the seat bun frame (2); and impact means (10,34) joined to the headrest cushion and responsive to movement by an occupant of the vehicle seat; characterised in that the impact means (10,34) is located on the opposite side of the pivot axis to the headrest cushion (6) and between the sides (22) of the seatback frame (2), whereby, upon a rear vehicle impact, the torso of the vehicle seat occupant moves the impact means in a rearward direction thereby moving the headrest cushion (6) in a forward direction towards the head of the vehicle seat occupant.

2. A vehicle seat and headrest arrangement (7) according to claim 1, in which the headrest cushion (6) is separated from the seatback frame (2) by at least one post (8,30).

3. A vehicle seat and headrest arrangement (7) according to claim 2, in which the post (8) is positionably held by a clamp (14,16) having a generally fixed pivotal axis (13) with a cross-frame member (4) of the seatback frame (2).

4. A vehicle seat and headrest arrangement (7) according to any one of claims 1 to 3, in which a spring (18) operatively associated with the seatback frame (2) biases the headrest cushion (6) against pivotal movement.

5. A vehicle seat and headrest arrangement (7) according to claim 4, in which the spring (18) elastically biases the headrest cushion (6) against pivotal movement up to a predetermined limit and thereafter plastically deforms.

6. A vehicle seat and headrest arrangement (7) according to claim 2, in which the impact means comprises an impact plate (34) operatively associated with the post (30) and at least one cam guide member (46) wherein a force exerted upon the impact plate (34) causes the headrest cushion (6) to rotate forwardly relative to the seatback frame (2).

7. A vehicle seat and headrest arrangement (7) according to claim 6, in which the seatback frame (2) has a cross-frame member (4) and the post (30) has a pivotal axis with respect to the cross-frame member (4) which is non-fixed with respect to the post (30) upon impact of the vehicle seat occupant upon the impact plate (34), causing the headrest cushion (6) to pivot forwardly and extend upwardly relative to the seatback frame (2).

8. A vehicle seat and headrest arrangement (7) according to claim 1, in which the headrest cushion (6) effectively extends upwardly relative to the seatback frame (2) upon its pivotal movement toward the head of the seat occupant.

9. A vehicle seat and headrest arrangement (7) according to claim 8, in which the headrest cushion (6) is connected with a post, and the headrest cushion (6) extends rearwardly of the pivotal axis of the headrest cushion (6).

10. A vehicle seat and headrest arrangement (7) according to claim 1, in which the impact means comprises a target plate (10) pivotally mounted to the seatback frame (2) along a pivotal axis (13) generally perpendicular to the fore and aft ends (5,9) underneath the headrest cushion (6) and operatively associated with the headrest cushion (6) so that rearward loading of the target plate (10) causes the headrest cushion (6) to pivot forwardly relative to the seatback frame (2).

## Patentansprüche

1. Fahrzeugsitz- und Kopfstützenanordnung, die einen Sitzgrundrahmen (3) mit vorderem und hinterem Ende (5, 9); einen Sitzrückenlehnenrahmen (2) mit zwei mit dem Sitzgrundrahmen (3) benachbart dem hinteren Ende (9) des Sitzgrundrahmens (3) verbundenen Seiten (22); ein Kopfstützkissen (6), das schwenkbar an dem Sitzrückenlehnenrahmen (2) entlang einer sich im wesentlichen senkrecht zu dem vorderen und dem hinteren Ende (5, 9) des Sitzgrundrahmens (2) erstreckenden Schwenkachse befestigt ist; und ein Aufprallmittel (10, 34) aufweist, das mit dem Kopfstützkissen verbunden ist und auf die Bewegung durch einen Insassen des Fahrzeugsitzes anspricht;
dadurch gekennzeichnet, daß
das Aufprallmittel (10, 34) an der dem Kopfstützkissen (6) gegenüberliegenden Seite der Schwenkachse und zwischen den Seiten (22) des Sitzrückenlehnenrahmens (2) angeordnet ist, wodurch, bei einem Fahrzeugaufprall von hinten, der Torso des Fahrzeugsitzinsassen das Aufprallmittel in eine rückwärtige Richtung bewegt, wodurch sich das Kopfstützkissen (6) in einer vorwärtigen Richtung zum Kopf des Fahrzeugsitzinsassen bewegt.

2. Fahrzeugsitz- und Kopfstützenanordnung (7) nach Anspruch 1, dadurch gekennzeichnet, daß
das Kopfstützkissen (6) von dem Sitzrückenlehnenrahmen (2) durch zumindest einen Pfosten (8, 30) getrennt ist.

3. Fahrzeugsitz- und Kopfstützenanordnung (7) nach Anspruch 2, dadurch gekennzeichnet, daß
der Pfosten (8) positionierbar durch eine Klammer (14, 16), die eine allgemein feststehende Schwenkachse (13) aufweist, an einem Querrahmenteil (4) des Sitzrückenlehnenrahmens (2) gehalten ist.

4. Fahrzeugsitz- und Kopfstützenanordnung (7) nach einem der Ansprüche 1 bis 3, dadurch gekennzeichnet, daß
eine mit dem Sitzrückenlehnenrahmen (2) wirksam verbundene Feder (18) das Kopfstützkissen (6) gegen Schwenkbewegung vorspannt.

5. Fahrzeugsitz- und Kopfstützenanordnung (7) nach Anspruch 4, dadurch gekennzeichnet, daß
die Feder (18) das Kopfstützkissen (6) gegen Schwenkbewegung bis hinauf zu einem vorbestimmten Grenzwert elastisch vorspannt und sich danach plastisch verformt.

6. Fahrzeugsitz- und Kopfstützenanordnung (7) nach Anspruch 2, dadurch gekennzeichnet, daß
das Aufprallmittel eine mit dem Pfosten (30) wirksam verbundene Aufprallplatte (34) und zumindest ein Steuerkurvenführungsteil (46) aufweist, wobei eine auf die Aufprallplatte (34) ausgeübte Kraft bewirkt, daß das Kopfstützkissen (6) relativ zu dem Sitzrückenlehnenrahmen (2) vorwärts schwenkt.

7. Fahrzeugsitz- und Kopfstützenanordnung (7) nach Anspruch 6, dadurch gekennzeichnet, daß
der Sitzrückenlehnenrahmen (2) ein Querrahmenteil (4) aufweist und der Pfosten (30) eine Schwenkachse in bezug zu dem Querrahmenteil (4) aufweist, die in bezug zu dem Pfosten (30) bei einem Aufprall des Fahrzeugsitzinsassen auf die Aufprallplatte (34) nicht feststehend ist,
wodurch bewirkt wird, daß das Kopfstützkissen (6) vorwärts schwenkt und sich relativ zu dem Sitzrückenlehnenrahmen (2) aufwärts erstreckt.

8. Fahrzeugsitz- und Kopfstützenanordnung (7) nach Anspruch 1, dadurch gekennzeichnet, daß
das Kopfstützkissen (6) sich während seiner Schwenkbewegung zum Kopf des Sitzinsassen hin relativ zum Sitzrückenlehnenrahmen (2) effektiv aufwärts erstreckt.

9. Fahrzeugsitz- und Kopfstützenanordnung (7) nach Anspruch 8, dadurch gekennzeichnet, daß
das Kopfstützkissen (6) mit einem Pfosten verbunden ist und das Kopfstützkissen (6) sich rückwärts von der Schwenkachse des Kopfstützkissens (6) erstreckt.

10. Fahrzeugsitz- und Kopfstützenanordnung (7) nach Anspruch 1, dadurch gekennzeichnet, daß
das Aufprallmittel eine Aufnahmeplatte (10) aufweist, die an dem Sitzrückenlehnenrahmen (2) entlang einer Schwenkachse (13) allgemein senkrecht zu dem vorderen und hinteren Ende (5, 9) unterhalb des Kopfstützkissens (6) schwenkbar montiert und wirksam mit dem Kopfstützkissen (6) verbunden ist, so daß rückwärtiges Belasten der Aufnahmeplatte (10) bewirkt, daß das Kopfstützkissen (6) relativ zum Sitzrückenlehnenrahmen (2) vorwärts schwenkt.

## Revendications

1. Ensemble siège et appui-tête de véhicule comprenant une structure de siège (3) en forme de brioche ou arrondie qui présente des extrémités avant et arrière (5, 9), une structure (2) de dossier présentant deux faces latérales (22) réunies à la structure arrondie (3) de siège dans une position adjacente à l'extrémité arrière (9) de la structure arrondie (3) de siège, un coussin (6) formant appui-tête fixé de manière pivotante à la structure (2) de dossier suivant un axe de pivotement qui s'étend approximativement de manière perpendiculaire aux extrémités avant et arrière (5, 9) de la structure arrondie (2) de siège, et un moyen (10, 34) de réception de chocs assemblé au coussin formant appui-tête et réagissant au mouvement effectué par un occupant du siège de véhicule, caractérisé en ce que le moyen (10, 34) de réception de chocs est situé du côté de l'axe de pivotement opposé au coussin (6) formant appui-tête et entre les faces latérales (22) de la structure (2) de dossier, si bien que, lors d'un choc du véhicule vers l'arrière, le torse de l'occupant du siège de véhicule déplace le moyen de réception de chocs en direction arrière, déplaçant ainsi le coussin (6) formant appui-tête en direction avant vers la tête de l'occupant du siège de véhicule.

2. Ensemble (7) siège et appui-tête de véhicule selon la revendication 1, dans lequel le coussin (6) formant appui-tête est séparé de la structure (2) de dossier par au moins un montant (8, 30).

3. Ensemble (7) siège et appui-tête de véhicule selon la revendication 2, dans lequel le montant (8) est retenu en place par un dispositif de serrage ou pince (14, 16) comportant un axe de pivotement (13) globalement fixe doté d'un élément (4) formant traverse de la structure (2) de dossier.

4. Ensemble (7) siège et appui-tête de véhicule selon l'une quelconque des revendications 1 à 3, dans lequel un ressort (18) associé de manière fonctionnelle avec la structure (2) de dossier rappelle le coussin (6) formant appui-tête pour empêcher un mouvement de pivotement.

5. Ensemble (7) siège et appui-tête de véhicule selon la revendication 4, dans lequel le ressort (18) rappelle élastiquement le coussin (6) formant appui-tête pour empêcher un mouvement de pivotement jusqu'à une limite prédéterminée, et ensuite se déforme plastiquement.

6. Ensemble (7) siège et appui-tête de véhicule selon la revendication 2, dans lequel le moyen de réception de chocs comprend une plaque (34) de chocs associée de manière fonctionnelle avec le montant (30) et au moins un élément (46) formant guide à cames, dans lequel une force exercée sur la plaque (34) de chocs fait tourner le coussin (6) formant appui-tête vers l'avant par rapport à la structure (2) de dossier.

7. Ensemble (7) siège et appui-tête de véhicule selon la revendication 6, dans lequel la structure (2) de dossier comporte un élément (4) formant traverse et le montant (30) comporte un axe de pivotement par rapport à l'élément (4) formant traverse qui est non fixe par rapport au montant (30) lors d'un choc provoqué par l'occupant du siège de véhicule sur la plaque (34) de chocs, faisant pivoter vers l'avant le coussin (6) formant appui-tête et le faisant s'avancer vers le haut par rapport à la structure (2) de dossier.

8. Ensemble (7) siège et appui-tête de véhicule selon la revendication 7, dans lequel le coussin (6) formant appui-tête s'avance réellement vers le haut par rapport à la structure (2) de dossier lors de son mouvement de pivotement vers la tête de l'occupant du siège.

9. Ensemble (7) siège et appui-tête de véhicule selon la revendication 8, dans lequel le coussin (6) formant appui-tête est relié à un montant, et le coussin (6) formant appui-tête s'avance vers l'arrière de l'axe de pivotement du coussin (6) formant appui-tête.

10. Ensemble (7) siège et appui-tête de véhicule selon la revendication 1, dans lequel le moyen de réception de chocs comprend une plaque (10) formant cible montée de façon pivotante sur la structure (2) de dossier suivant un axe de pivotement (13) globalement perpendiculaire aux extrémités avant et arrière (5, 9) au-dessous du coussin (6) formant appui-tête, et associée de manière fonctionnelle au coussin (6) formant appui-tête, de telle sorte qu'une charge vers l'arrière de la plaque (10) formant cible fait pivoter le coussin (6) formant appui-tête vers l'avant par rapport à la structure (2) de dossier.
